(19) Europäisches Patentamt
European Patent Office
Office européen des brevets

(11) **EP 4 253 575 A1**

(12) **EUROPEAN PATENT APPLICATION**
published in accordance with Art. 153(4) EPC

(43) Date of publication:
**04.10.2023 Bulletin 2023/40**

(51) International Patent Classification (IPC):
**C21D 8/12** (2006.01)        **C22C 38/00** (2006.01)
**C22C 38/14** (2006.01)        **H01F 1/147** (2006.01)

(21) Application number: **20963528.3**

(52) Cooperative Patent Classification (CPC):
**C21D 8/12; C22C 38/00; C22C 38/14; H01F 1/147**

(22) Date of filing: **27.11.2020**

(86) International application number:
**PCT/JP2020/044203**

(87) International publication number:
**WO 2022/113264 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventor: **ARITA, Yoshihiro**
**Tokyo 100-8071 (JP)**

(74) Representative: **Vossius & Partner**
**Patentanwälte Rechtsanwälte mbB**
**Siebertstraße 3**
**81675 München (DE)**

(54) **NON-ORIENTED ELECTROMAGNETIC STEEL SHEET, METHOD FOR PRODUCING SAME, AND HOT-ROLLED STEEL SHEET**

(57)     A non-oriented electrical steel sheet is provided which has a chemical composition including, in mass%, C: 0.0010 to 0.0050%, Si: 1.50% or less, Mn: 0.10 to 1.50%, sol. Al: 0.010 to 0.040%, Ti: 0.0030% or less, Nb: 0.0030% or less, V: 0.0030% or less, Zr: 0.0030% or less, N: 0.0030% or less, S: 0.0040% or less, B: 0.0045% or less, and the balance: Fe and impurities, and which satisfies [$0.0020 \leq$ Ti+Nb+V+Zr $\leq 0.0120$], [$0.5 \leq$ B/N $\leq 1.5$], [sol. B $\leq 0.0005$], and [$N_{AlN} \leq 0.0005$].

EP 4 253 575 A1

**Description**

TECHNICAL FIELD

The present invention relates to a non-oriented electrical steel sheet, a method for producing the non-oriented electrical steel sheet, and a hot-rolled steel sheet that serves as a starting material for the non-oriented electrical steel sheet.

BACKGROUND ART

In recent years, due to the growing demand globally for energy savings in electrical equipment, there is also a demand for higher performance characteristics with respect to non-oriented electrical steel sheets which are used as the iron core material of a rotary machine. Specifically, among motors of electrical products, models that are said to be high efficiency models are increasingly adopting high-grade starting materials in which the contents of Si and Al are increased to increase the resistivity and the crystal grain size is also made larger. On the other hand, while an improvement in performance is also being demanded for motors of general-purpose models, the reality is that, because of strict cost constraints, it is difficult to switch the materials of such models to the kind of high-grade starting materials that are used for high efficiency models.

A steel sheet required for a general-purpose model is a starting material that has a content of Si of 1.5% or less in which grain growth is promoted during stress relief annealing performed after motor core punching, to thereby dramatically improve iron loss.

Furthermore, recently the number of users who utilize the scrap generated during core punching as a raw material for castings is increasing. From the viewpoint of ensuring the castability of scrap, it has become necessary to make the content of Al in a steel sheet less than 0.05%.

As means for improving grain growth during stress relief annealing, for example, Patent Document 1 discloses a method for producing an electrical iron sheet excellent in magnetic properties, characterized in that the method includes subjecting a hot-rolled sheet obtained by hot rolling a steel slab consisting of C: $\leq$ 0.065%, Si: $\leq$ 2.0%, Al: $\leq$ 0.10%, O: $\leq$ 0.020%, and B/N: 0.50 to 2.50, with the balance being Fe and unavoidable impurities to cold rolling one time or to cold rolling two or more times with intermediate annealing therebetween to obtain the final dimensions, and thereafter performing further annealing.

Patent Document 2 discloses a non-oriented electrical steel sheet having little iron loss, the non-oriented electrical steel sheet containing C: 0.015% or less, Si: 0.1 to 1.0%, sol. Al: 0.001 to 0.005%, Mn: 1.5% or less, S: 0.008% or less, N: 0.0050% or less, and T. O: 0.02% or less, that is characterized by a ratio of the weight of MnO with respect to the total weight of $SiO_2$, MnO, and $Al_2O_3$ that are three kinds of inclusions in the steel being 15% or less, the average crystal grain size 50 $\mu$m or more being achievable after magnetic annealing.

Patent Document 3 discloses a non-oriented electrical steel sheet that is excellent in magnetic properties, the non-oriented electrical steel sheet consisting of, in wt%, C: 0.01% or less, Si: 0.1% or more to 2.0% or less, Mn: 0.1% or more to 1.5% or less, and, in accordance with a deoxidization system of the steel, Al: 0.1% or less or Zr: 0.05% or less, with the balance being Fe and unavoidable impurity elements, characterized in that the number of oxide particles having a size with a diameter ranging from 0.5 $\mu$m or more to 5 $\mu$m or less in the steel is 1000 particles or more to 50000 particles or less per cm$^2$.

Patent Document 4 discloses a non-oriented electrical steel sheet which is composed of a steel containing, in mass%, C: 0.0050% or less, Si: 0.05 to 3.5%, Mn: 3.0% or less, Al: 3.0% or less, S: 0.008% or less, P: 0.15% or less, N: 0.0050% or less, and Cu: 0.2% or less, and satisfying the relation (S as Cu sulfide)/(S contained in the steel) $\leq$ 0.2, or (S as Cu sulfide)/(S as Mn sulfide) $\leq$ 0.2, and furthermore, the number density of sulfides containing Cu and having a diameter of 0.03 to 0.20 $\mu$m in the steel sheet is 0.5 particles/$\mu$m$^3$ or less.

Patent Document 5 discloses a non-oriented electrical steel sheet consisting of, in mass%, Si: 1.5% or less, Mn: 0.4% or more to 1.5% or less, sol. Al: 0.01% or more to 0.04% or less, Ti: 0.0015% or less, N: 0.0030% or less, S: 0.0010% or more to 0.0040% or less, and B in an amount such that B/N is 0.5 or more to 1.5 or less, with the balance being Fe and unavoidable impurities, wherein, among sulfides containing Mn, the numerical proportion of such sulfides which undergo composite precipitation with B precipitates is 10% or more, the total distribution density of MnS, $Cu_2S$, and complex sulfides thereof is $3.0 \times 10^5$ particles/mm$^2$ or less, and the distribution density of Ti precipitates having a diameter of less than 0.1 $\mu$m is $1.0 \times 10^3$ particles/mm$^2$ or less.

LIST OF PRIOR ART DOCUMENTS

PATENT DOCUMENT

Patent Document 1: JP54-163720A
Patent Document 2: JP63-195217A
Patent Document 3: JP3-104844A
Patent Document 4: JP2004-2954A
Patent Document 5: WO 2005/100627

SUMMARY OF INVENTION

TECHNICAL PROBLEM

However, in the current situation in which further reductions in iron loss are needed, it has become difficult to adequately and stably produce a non-oriented electrical steel sheet by applying the aforementioned prior art. In particular, when the techniques disclosed in Patent Document 1 and Patent Document 5 are employed in which, in Al-deoxidized steel, B is added in an amount of about 0.002% to generate BN as a nitride and suppress precipitation of AlN that is harmful to grain growth, there is the problem that even if a low iron loss is obtained, the magnetic flux density is lower in comparison to the Si deoxidation disclosed in Patent Document 2 and Patent Document 4. Although in Patent Document 5 an effect that improves magnetic flux density by addition of Sn is disclosed, a problem with this technique is that the cost increases. While it is also conceivable to promote coarsening of grains by adding a special process such as skin-pass rolling, in such a case also there a problem that the production cost is significantly increased.

An objective of the present invention, which has been made in view of the above problem, is to provide a non-oriented electrical steel sheet in which, while suppressing the formation of AlN and reducing dissolved B (sol. B), the grain growth after stress relief annealing is good, and the iron loss and the magnetic flux density are favorable, a method for producing the non-oriented electrical steel sheet, and a hot-rolled steel sheet that can be used as a starting material for the non-oriented electrical steel sheet.

SOLUTION TO PROBLEM

The present invention has been made to solve the above problem, and the gist of the present invention is a non-oriented electrical steel sheet, a method for producing the non-oriented electrical steel sheet, and a hot-rolled steel sheet which are described in the following.

(1) A non-oriented electrical steel sheet having a chemical composition including, in mass%,

C: 0.0010 to 0.0050%,
Si: 1.50% or less,
Mn: 0.10 to 1.50%,
sol. Al: 0.010 to 0.040%,
Ti: 0.0030% or less,
Nb: 0.0030% or less,
V: 0.0030% or less,
Zr: 0.0030% or less,
N: 0.0030% or less,
S: 0.0040% or less,
B: 0.0045% or less,
with the balance being Fe and impurities,
and satisfying Formulas (i) to (iv) below:

$$0.0020 \leq Ti+Nb+V+Zr \leq 0.0120 \ ...(i)$$

$$0.5 \leq B/N \leq 1.5 \ ...(ii)$$

$$\text{sol. B} \leq 0.0005 \text{ ...(iii)}$$

$$N_{AlN} \leq 0.0005 \text{ ...(iv)}$$

where each symbol of an element in Formulas (i) and (ii) above represents a content (mass%) of a corresponding element, sol. B in Formula (iii) above represents a dissolved B amount (mass%), and $N_{AlN}$ in Formula (iv) above represents an N amount (mass%) that is present as AlN.

(2) The non-oriented electrical steel sheet according to the above (1), wherein the chemical composition contains, in lieu of a part of the Fe, in mass%,
Sn: 0.50% or less.

(3) The non-oriented electrical steel sheet according to the above (1) or (2), wherein:

an average crystal grain size is 30 $\mu$m or less, and
an average crystal grain size after performing stress relief annealing under conditions of holding the non-oriented electrical steel sheet at 750°C for two hours is 50 $\mu$m or more.

(4) A method for producing a non-oriented electrical steel sheet, that is a method for producing the non-oriented electrical steel sheet according to any one of the above (1) to (3), including:

a steelmaking process of producing a slab having a chemical composition according to the above (1) or (2),
a hot rolling process of, after heating the slab that is obtained, performing hot rolling to obtain a hot-rolled steel sheet,
a pickling process of performing pickling on the hot-rolled steel sheet,
a cold rolling process of performing cold rolling on the hot-rolled steel sheet after pickling to obtain a cold-rolled steel sheet, and
a finish annealing process of subjecting the cold-rolled steel sheet to finish annealing,
wherein:

in the hot rolling process,
before performing hot rolling, a temperature of the slab is held within a range of 1000 to 1050°C for 30 minutes or more,
an accumulative rolling ratio within a temperature range of 900 to 1000°C is made 70% or more, and
after hot rolling is performed, a temperature of the hot-rolled steel sheet is held within a range of 700°C or more to less than 780°C for 30 minutes or more.

(5) The method for producing a non-oriented electrical steel sheet according to the above (4), wherein:
in the finish annealing process, the cold-rolled steel sheet is heated to a highest temperature reached of 800°C or more to less than 850°C at an average heating rate of 20°C/s or more, and a time period for which a temperature of the cold-rolled steel sheet is 800°C or more is 15 seconds or less.

(6) A hot-rolled steel sheet which serves as a starting material for the non-oriented electrical steel sheet according to any one of the above (1) to (3), having a chemical composition including, in mass%,

C: 0.0010 to 0.0050%,
Si: 1.50% or less,
Mn: 0.10 to 1.50%,
sol. Al: 0.010 to 0.040%,
Ti: 0.0030% or less,
Nb: 0.0030% or less,
V: 0.0030% or less,
Zr: 0.0030% or less,
N: 0.0030% or less,
S: 0.0040% or less,
B: 0.0045% or less, and
the balance: Fe and impurities,
and satisfying Formulas (i) to (iv) below:

$$0.0020 \leq Ti+Nb+V+Zr \leq 0.0120 \ ...(i)$$

$$0.5 \leq B/N \leq 1.5 \ ...(ii)$$

$$sol. \ B \leq 0.0005 \ ...(iii)$$

$$N_{AlN} \leq 0.0005 \ ...(iv)$$

where each symbol of an element in Formulas (i) and (ii) above represents a content (mass%) of a corresponding element, sol. B in Formula (iii) above represents a dissolved B amount (mass%), and $N_{AlN}$ in Formula (iv) above represents an N amount (mass%) that is present as AlN.

(7) The hot-rolled steel sheet according to the above (6), wherein the chemical composition contains, in lieu of a part of the Fe, in mass%,
Sn: 0.50% or less.

ADVANTAGEOUS EFFECTS OF INVENTION

According to the present invention, a non-oriented electrical steel sheet in which grain growth after stress relief annealing is good and in which the iron loss and the magnetic flux density after stress relief annealing are favorable can be stably provided at a low cost.

BRIEF DESCRIPTION OF DRAWINGS

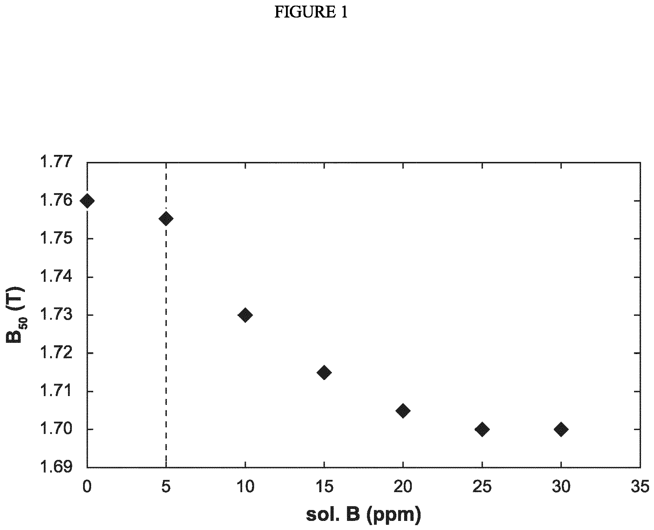

[Figure 1] Figure 1 is a view illustrating a relation between an excess B amount and magnetic flux density.

DESCRIPTION OF EMBODIMENTS

The present inventors conducted studies to investigate the reason why the magnetic flux density of Al-deoxidized steel containing about 0.002% B is lower in comparison to the magnetic flux density of Si-deoxidized steel, which focused on the existence form of B. B has an effect of suppressing precipitation of AlN, which is extremely harmful to grain growth. This is because B forms nitrides more easily than Al. However, the present inventors found that when an excessive amount of B is contained in a non-oriented electrical steel sheet, B is present in a dissolved state and reduces the magnetic flux density (see Figure 1).

If the content of B is reduced, although an increase in the dissolved B amount that is caused by excessive B does not occur, AlN forms due to excess N, and grain growth deteriorates. Therefore, although it is preferable to increase the content of B as much as possible within a range that does not result in dissolved B, it is industrially difficult to perform such highly accurate control of the content of B. The reason is that, in addition to Al and B, other nitride-forming elements also exist such as Ti, Nb, V, and Zr, and the presence of these elements must also be taken into consideration when controlling the content of B, and since these elements are usually mixed in a non-oriented electrical steel sheet as impurities, it is difficult to accurately ascertain the amount thereof. In addition, since the content of N in a non-oriented electrical steel sheet can also change during the steelmaking process, it is difficult to accurately ascertain the amount of B that should be added. Thus, industrially, it is very difficult to cause B to be contained in a non-oriented electrical steel sheet in an amount that is neither excessive nor insufficient for suppressing AlN formation.

In view of the above circumstances, the present inventors conducted earnest studies regarding a method for obtaining favorable magnetic properties while allowing the occurrence of both a case where a B amount is excessive with respect to an N amount and a case where a B amount is insufficient with respect to an N amount, and as a result obtained the following findings.

First, the present inventors conducted studies regarding a method for forming B precipitates other than BN during hot rolling in a case where an amount of B is excessively large with respect to an N amount. As a result, the present inventors found that the amount of B precipitates other than BN can be increased if the temperature during hot rolling and the accumulative rolling ratio are set within a preferable range. Specifically, it is desirable to perform hot rolling under conditions such that the accumulative rolling ratio within a temperature range of 900 to 1000°C is 70% or more. It is surmised that the aforementioned effect occurs because precipitation of B is promoted by the hot rolling.

In addition, by thereafter subjecting the steel sheet after hot rolling to a heat treatment in which the steel sheet is held in a temperature range of 700°C or more to less than 780°C for 30 minutes or more, the aforementioned B precipitates other than BN that were formed during the process can be caused to grow. As a result, during finish annealing of the steel sheet after cold rolling, or during stress relief annealing of the steel sheet (non-oriented electrical steel sheet) after finish annealing, grain growth is good and a low iron loss and a high magnetic flux density can be realized.

Next, the present inventors conducted studies regarding a method which does not cause formation of AlN, which is harmful to grain growth, in a case where the amount of B is insufficient with respect to the amount of N. As a result, the present inventors found that when a heat treatment is performed in which a slab before hot rolling is held in a temperature range of 1000 to 1050°C for 30 minutes or more, and a heat treatment is also performed in which the steel sheet after hot rolling is held in a temperature range of 700°C or more to less than 780°C for 30 minutes or more, formation of AlN can be avoided, and in finish annealing of the steel sheet after cold rolling, or in stress relief annealing of the non-oriented electrical steel sheet after finish annealing, grain growth is good and a low iron loss and a high magnetic flux density are obtained.

Based on the above findings, the present inventors discovered conditions under which, in Al-deoxidized steel to which B was added in an amount of about 0.002%, both a low iron loss and a high magnetic flux density can be compatibly achieved without adding a special process to promote coarsening of the grains, and thereby completed the present invention.

The present invention has been made based on the above findings. The respective requirements of the present invention are described hereunder.

1. Chemical composition

The chemical composition of a non-oriented electrical steel sheet and a hot-rolled steel sheet according to one embodiment of the present invention will now be described. The reasons for limiting each element are as follows. Note that, the symbol "%" with respect to content in the following description means "mass percent".

C: 0.0010 to 0.0050%

C has an effect of fixing dissolved B as carbides. However, if C is contained in an amount that is more than 0.0050%, C will cause iron loss to deteriorate due to magnetic aging. Therefore, the content of C is to be 0.0010 to 0.0050%. The content of C is preferably 0.0015% or more, 0.0020% or more, or 0.0025% or more. Further, the content of C is preferably 0.0045% or less, 0.0040% or less, or 0.0035% or less.

Si: 1.50% or less

Si is an effective element for increasing electrical resistance. However, if the content of Si is more than 1.50%, an increase in hardness, a decrease in magnetic flux density, and an increase in the production cost and the like will occur. Therefore, the content of Si is to be 1.50% or less. The content of Si is preferably 1.30% or less, 1.00% or less, or 0.80% or less. Although the lower limit value of the content of Si is 0%, in order to obtain the aforementioned effect, the content of Si is preferably 0.10% or more, 0.20% or more, or 0.50% or more.

Mn: 0.10 to 1.50%

Mn is a sulfide-forming element, and preferably is contained in an appropriate amount from the viewpoint of promoting grain growth. However, if the content of Mn is more than 1.50%, the transformation temperature will decrease and control of the micro-structure of the hot-rolled steel sheet will be difficult, and it will not be possible to promote grain growth, and consequently there will be a deterioration in iron loss. In addition, there will be a marked decrease in saturation magnetic flux density. Therefore, the content of Mn is to be 0.10 to 1.50%. The content of Mn is preferably 0.30% or more, 0.50% or more, or 0.70% or more. Further, the content of Mn is preferably 1.20% or less, 1.00% or less, or 0.80% or less.

Sol. Al: 0.010 to 0.040%

Al is an element that is necessary for deoxidization of the steel. If the content of sol. Al (Al present in a dissolved state) is less than 0.010%, a stable deoxidizing effect will not be obtained, and a problem such as a nozzle blockage will occur. On the other hand, from the viewpoint of scrap utilization by the user, the smaller that the content of Al is, the more preferable it is. Therefore, the content of sol. Al is to be 0.010 to 0.040%. The content of sol. Al is preferably 0.015% or more, 0.020% or more, or 0.025% or more. Further, the content of sol. Al is preferably 0.035% or less, 0.030% or less, or 0.028% or less.

Ti: 0.0030% or less

Ti forms nitrides and thus causes grain growth to markedly deteriorate. However, since Ti is an element that mixes into steel as an impurity, it is industrially difficult to make the content of Ti zero. Further, a trace amount of Ti has an effect of inhibiting the formation of AlN. On the other hand, if the content of Ti is excessive, the Ti will cause grain growth to deteriorate. Therefore, the content of Ti is to be 0.0030% or less. The content of Ti is preferably 0.0025% or less, 0.0020% or less, or 0.0015% or less. On the other hand, when it is desired to obtain the aforementioned effect, the content of Ti is preferably 0.0005% or more, 0.0008% or more, 0.0010% or more, or 0.0012% or more.

Nb: 0.0030% or less

Nb forms nitrides and thus causes grain growth to markedly deteriorate. However, since Nb is an element that mixes into steel as an impurity, it is industrially difficult to make the content of Nb zero. Further, a trace amount of Nb has an effect of inhibiting the formation of AlN. On the other hand, if the content of Nb is excessive, the Nb will cause grain growth to deteriorate. Therefore, the content of Nb is to be 0.0030% or less. The content of Nb is preferably 0.0025% or less, 0.0020% or less, or 0.0015% or less. On the other hand, when it is desired to obtain the aforementioned effect, the content of Nb is preferably 0.0005% or more, 0.0008% or more, 0.0010% or more, or 0.0012% or more.

V: 0.0030% or less

V forms nitrides and thus causes grain growth to markedly deteriorate. However, since V is an element that mixes into steel as an impurity, it is industrially difficult to make the content of V zero. Further, a trace amount of V has an effect of inhibiting the formation of AlN. On the other hand, if the content of V is excessive, the V will cause grain growth to deteriorate. Therefore, the content of V is to be 0.0030% or less. The content of V is preferably 0.0025% or less, 0.0020% or less, or 0.0015% or less. On the other hand, when it is desired to obtain the aforementioned effect, the content of V is preferably 0.0005% or more, 0.0008% or more, 0.0010% or more, or 0.0012% or more.

Zr: 0.0030% or less

Zr forms nitrides and thus causes grain growth to markedly deteriorate. However, since Zr is an element that mixes into steel as an impurity, it is industrially difficult to make the content of Zr zero. Further, a trace amount of Zr has an effect of inhibiting the formation of AlN. On the other hand, if the content of Zr is excessive, the Zr will cause grain growth to deteriorate. Therefore, the content of Zr is to be 0.0030% or less. The content of Zr is preferably 0.0025% or less, 0.0020% or less, or 0.0015% or less. On the other hand, when it is desired to obtain the aforementioned effect, the content of Zr is preferably 0.0005% or more, 0.0008% or more, 0.0010% or more, or 0.0012% or more.

Any element among Ti, Nb, V and Zr may be contained independently, or two or more elements may be contained in combination. However, if the total content of these elements is too small, an effect of inhibiting formation of AlN will not be obtained, while on the other hand, an excessive total content of these elements will cause grain growth to deteriorate. Therefore, it is necessary that the total content of these elements satisfies the following Formula (i).

$$0.0020 \leq Ti+Nb+V+Zr \leq 0.0120 \ ...(i)$$

Where, each symbol of an element in the above Formula (i) represents the content (mass%) of the corresponding element.

N: 0.0030% or less

N forms nitrides, which are harmful to grain growth. As a condition that does not cause grain growth to deteriorate, the upper limit of the content of N is to be 0.0030%. The content of N is preferably 0.0025% or less, 0.0020% or less, or 0.0015% or less. Note that, although the content of N is preferably reduced as much as possible, since N is an element that mixes into steel as an impurity, it is industrially difficult to make the content of N zero. In the present invention, on the premise that N is contained to a certain extent, a lower limit value of the content of N is defined by a relational expression with the content of B that is described later. On the other hand, a lower limit value of the content of N may be specified separately. For example, the content of N may be specified as 0.0008% or more, 0.0010% or more, or 0.0012% or more. Note that, the term "content of N" means the content of all forms of N, including N forming $N_{AlN}$, which is described later, and BN and the like.

S: 0.0040% or less

S forms sulfides, thereby causing grain growth to markedly deteriorate. In particular, if the content of S is more than 0.0040%, the amount of sulfide precipitation will increase, and grain growth will be inhibited. Therefore, the content of S is to be 0.0040% or less. The content of S is preferably 0.0035% or less, 0.0030% or less, or 0.0025% or less. Although the lower limit value of the content of S is 0%, taking into consideration the refining cost, the content of S may be set to 0.0008% or more, 0.0010% or more, or 0.0012% or more.

B: 0.0045% or less

B is an essential element for inhibiting formation of AlN, which is harmful to grain growth. Therefore, the content of B is to be within a range of 0.0045% or less, and is to be defined in accordance with the aforementioned content of N. Specifically, the content of B is to be controlled so as to satisfy the following Formula (ii). Note that, the term "content of B" means the content of all forms of B, including dissolved B (sol. B) and B forming precipitates such as BN and the like. Making the value of B/N fall within the range of 0.5 to 1.5 is one of the important means for achieving both a reduction in the amount of dissolved B and the suppression of AlN formation. Note that, the value of B/N is preferably 0.6 or more, 0.7 or more, or 0.8 or more. Further, B/N is preferably 1.4 or less, 1.3 or less, or 1.0 or less.

$$0.5 \leq B/N \leq 1.5 \ ...(ii)$$

Where, each symbol of an element in Formula (ii) above represents the content (mass%) of the corresponding element.
Further, in the present invention, in addition to the content of B, the content of sol. B is also defined. As an upper limit that does not affect the magnetic flux density, the content of sol. B is to be 0.0005% or less. In other words, it is necessary that the content of sol. B satisfies the following Formula (iii).

$$sol. \ B \leq 0.0005 \ ...(iii)$$

The content of sol. B is preferably 0.0004% or less, or 0.0003% or less. Note that, since the content of sol. B is preferably reduced as much as possible, the lower limit value thereof is 0%. On the other hand, the content of sol. B may be defined as 0.00005% or more, 0.00010% or more, or 0.00015% or more.
In the present invention, the content of sol. B is measured by the following procedure. First, a specimen is cut out from the non-oriented electrical steel sheet or the hot-rolled steel sheet, and the specimen is subjected to electrolysis in 10% acetylacetone-1% tetramethylammonium chloride-methanol at a current density of 20 mA/cm$^2$ to cause a reduction in weight of approximately 0.4 g. The solution used for the electrolysis is filtered using a filter with a pore size of 0.2 $\mu$m, and the content of B in the extraction residue collected on the filter is measured using ICP atomic emission spectroscopy. A value obtained by subtracting the content of B in the extraction residue from the content of B in the steel is adopted as the content of sol. B.

Sn: 0.50% or less

In the present invention, Sn is not essential, and therefore the lower limit value of the content of Si is 0%. From the viewpoint of reducing the alloying cost, the content of Sn is preferably reduced as much as possible. However, Sn has an advantageous effect of improving the magnetic flux density. In addition, Sn also has an effect of suppressing nitriding and oxidation on the steel sheet surface during annealing. Further, in a case where sol. Al is contained in an amount of 0.010 to 0.040%, Sn is particularly likely to be nitrided. Therefore, Sn may be contained as necessary. Specifically the content of Sn is preferably 0.01% or more, 0.02% or more, or 0.05% or more. On the other hand, even if the content of Sn is too large, the effect thereof will be saturated, and therefore the content of Sn may be set to 0.40% or less, 0.30% or less, 0.20% or less, 0.10% or less, 0.09% or less, or 0.08% or less.

2. Precipitates

The content of N forming AlN (hereinafter, described as "$N_{AlN}$") is to be 0.0005% or less as the upper limit thereof that does not affect grain growth. In other words, it is necessary that the content of $N_{AlN}$ satisfies the following

Formula (iv).

$$N_{AIN} \leq 0.0005 \ ...(iv)$$

The content of $N_{AIN}$ is preferably 0.0004% or less, or 0.0003% or less. Note that, since the content of $N_{AIN}$ is preferably reduced as much as possible, the lower limit value of the content of $N_{AIN}$ is 0%. On the other hand, the content of $N_{AIN}$ may be defined as 0.00005% or more, 0.00010% or more, or 0.00015% or more.

In the present invention, the content of $N_{AIN}$ is measured by the following procedure. First, a specimen is cut out from the non-oriented electrical steel sheet or the hot-rolled steel sheet, and the specimen is subjected to electrolysis in 10% acetylacetone-1% tetramethylammonium chloride-methanol at a current density of 20 mA/cm$^2$ to cause a reduction in weight of approximately 0.4 g. The solution used for the electrolysis is filtered using a filter with a pore size of 0.2 $\mu$m, and the content of Al in the extraction residue collected on the filter is measured using ICP atomic emission spectroscopy. Further, since it is considered that all the Al in the extraction residue is present as AlN, the content of N in the extraction residue is determined by multiplying the content of Al in the extraction residue by 14/27, and the obtained value is adopted as the content of $N_{AIN}$.

Note that, as mentioned above, in the present invention, although the state of precipitates is extremely important, the precipitates state is not particularly defined. The reason is that, since the precipitates are extremely fine, it is technically difficult to define the state thereof. Furthermore, it has been confirmed that by making the amount of $N_{AIN}$ and the like that forms precipitates fall within the aforementioned range, precipitates are favorably controlled and the magnetic properties of the non-oriented electrical steel sheet are improved.

3. Crystal grain size

The average crystal grain size in the non-oriented electrical steel sheet according to the present embodiment is not particularly defined. As mentioned above, the non-oriented electrical steel sheet is used after undergoing machining and stress relief annealing, and hence the average crystal grain size varies according to the conditions of the stress relief annealing. Taking into consideration the actual conditions of usage described above, as long as the grain growth properties during the stress relief annealing are good, it is not essential to define the average crystal grain size at the stage of the non-oriented electrical steel sheet. On the other hand, the average crystal grain size is an important factor from the viewpoint of improving punchability. In a non-oriented electrical steel sheet that is subjected to punching, if the average crystal grain size is 30 $\mu$m or less, the punchability improves. Therefore, the average crystal grain size of the non-oriented electrical steel sheet after finish annealing may be made 30 $\mu$m or less. A known technique can be appropriately used as means for making the average crystal grain size 30 $\mu$m or less.

Generally, non-oriented electrical steel sheets are subjected to machining and stress relief annealing after shipment. When the average crystal grain size after stress relief annealing is 50 $\mu$m or more, the iron loss characteristics are extremely improved. Because the chemical composition and the state of oxides of the non-oriented electrical steel sheet according to the present embodiment are controlled to be within the preferable ranges, the average crystal grain size after performing stress relief annealing under conditions in which the non-oriented electrical steel sheet is held at 750°C for two hours is 50 $\mu$m or more. Note that, for actual products, conditions for performing stress relief annealing are not limited to the aforementioned condition, and the annealing temperature and time may be appropriately changed in consideration of both equipment constraints and promotion of grain growth.

The average crystal grain size of the non-oriented electrical steel sheet can be determined by the following method. An L cross section (cross section parallel to the rolling direction) of the non-oriented electrical steel sheet is subjected to polishing and etching, and then observed using an optical microscope. The observation magnification is set to ×100, the area of the observation visual field is set to 0.5 mm$^2$, and the number of observation points is set to three points. The average crystal grain size of the non-oriented electrical steel sheet is then determined by applying the method described in "Steels - Micrographic Determination of the Apparent Grain Size" specified in JIS G 0551: 2013 to these optical micrographs.

4. Production method

A method for producing the non-oriented electrical steel sheet according to the present embodiment includes a steelmaking process, a hot rolling process, a pickling process, a cold rolling process, and a finish annealing process.

(a) Steelmaking process

In the steelmaking process, a slab having the aforementioned chemical composition is produced by performing appropriate refining and casting. The production conditions in the steelmaking process are not particularly limited, and well-known conditions can be appropriately adopted.

(b) Hot rolling process

In the hot rolling process, the slab obtained by a continuous casting process is heated, and thereafter is subjected to hot rolling to obtain a hot-rolled steel sheet. A hot-rolled steel sheet according to one embodiment of the present invention is produced by the present process. Note that, the processes after the hot rolling process do not substantially affect the chemical composition and the state of oxides. Therefore, as mentioned above, the chemical composition and state of precipitates of the hot-rolled steel sheet are common with the non-oriented electrical steel sheet according to the present embodiment.

The hot rolling process is an important process for controlling precipitates and securing magnetic properties. In the hot rolling process, before performing hot rolling, the temperature of the slab is held within a range of 1000 to 1050°C for 30 minutes or more. Next, hot rolling is performed so that the accumulative rolling ratio within a temperature range of 900 to 1000°C is 70% or more. Then, after the hot rolling is performed, the temperature of the hot-rolled steel sheet is held within a range of 700°C or more to less than 780°C for 30 minutes or more.

As mentioned above, it is technically very difficult to determine in the steelmaking process whether the content of B is excessive or is insufficient with respect to the content of N. However, by satisfying the aforementioned production conditions in the hot rolling process, it is possible to correspond to both a case where the content of B is excessive with respect to the content of N and a case where the content of B is insufficient with respect to the content of N. Each of these cases is described in detail hereunder.

First, in a case where the content of B is excessive with respect to the content of N, since the amount of AIN can be suppressed by fixing N using B, it is possible to make the content of $N_{AIN}$ 0.0005% or less. On the other hand, because there is an excess of B, there is a risk that the content of sol. B will be more than 0.0005%. Therefore, it is necessary to suppress the content of dissolved B by causing the formation of B precipitates other than BN. Although B forms carbides, the precipitation temperature of B carbides is relatively low. Therefore, it is possible to promote precipitation of B carbides by making the accumulative rolling ratio within a temperature range of 900 to 1000°C a ratio of 70% or more.

Further, although precipitation of B carbides is promoted by performing hot rolling under the aforementioned conditions, there is a possibility that a part of B will remain as it is in a dissolved state in the steel sheet after hot rolling. However, after performing hot rolling, it is possible to cause such dissolved B to precipitate by holding the temperature of the hot-rolled steel sheet within a range of 700°C or more to less than 780°C for 30 minutes or more. This is because B carbides do not precipitate even if the holding temperature is less than 700°C, and dissolve if the holding temperature is 780°C or more.

Next, in a case where the content of B is insufficient with respect to the content of N, although sol. B can be made 0.0005% or less, it is necessary to suppress formation of AIN. In the present invention, formation of AIN that is harmful to grain growth is suppressed by causing the formation of nitrides of Ti, Nb, V, and Zr. Because these nitrides are relatively fine, it is necessary to cause these nitrides to sufficiently grow in the present process. Therefore, before performing hot rolling, the temperature of the slab is held within a range of 1000 to 1050°C for 30 minutes or more, and after performing hot rolling, the temperature of the hot-rolled steel sheet is held within a range of 700°C or more to less than 780°C for 30 minutes or more. By this means, by fixing N using Ti, Nb, V, and Zr, and thereby suppressing the amount of AIN, it is possible to make the content of $N_{AIN}$ 0.0005% or less.

Note that, although the rolling reduction in the hot rolling process is not particularly limited, the rolling reduction is preferably 90% or more. Further, although the thickness of the hot-rolled steel sheet that is obtained is not particularly limited, preferably the thickness is 1.0 to 4.0 mm, and more preferably is 2.0 to 3.0 mm.

(c) Pickling process

In the pickling process, the hot-rolled steel sheet obtained by performing the hot rolling process is subjected to pickling. The pickling conditions are not particularly limited, and it suffices to set the pickling conditions within a normal range with respect to conditions for producing a non-oriented electrical steel sheet.

(d) Cold rolling process

In the cold rolling process, the hot-rolled steel sheet that was subjected to pickling is subjected to cold rolling to obtain a cold-rolled steel sheet. The cold rolling conditions are not particularly limited, and it suffices to set the cold rolling conditions within a normal range with respect to conditions for producing a non-oriented electrical steel sheet. For example, with regard to the rolling reduction in the cold rolling process, the rolling reduction is preferably set within a range of 50 to 95%, and more preferably within a range of 75 to 85%.

(e) Finish annealing process

In the finish annealing process, the cold-rolled steel sheet obtained by performing the cold rolling process is subjected to finish annealing. The conditions in the finish annealing process are not particularly limited, and well-known conditions can be appropriately used. However, it is preferable to raise the heating rate of the cold-rolled steel sheet because the magnetic flux density can be increased as a result. Accordingly, the heating rate in the finish annealing process is preferably made 20°C/s or more. Here, the term "heating rate" refers to a value obtained by dividing the difference between the heating start temperature of the cold-rolled steel sheet and the holding temperature by the time period taken to reach the holding temperature from the heating start temperature, in other words, the term "heating rate" refers to the average heating rate from the heating start temperature to the holding temperature.

Further, in the finish annealing process, if the highest temperature reached (temperature of cold-rolled steel sheet) is 850°C or more, the crystal grain sizes will be too large, and there is a possibility that defects will occur during punching that is performed before stress relief annealing. To avoid such a situation, the highest temperature reached is preferably made less than 850°C. On the other hand, if the highest temperature reached is less than 800°C, there is a possibility that recrystallization will be insufficient and defects will occur during the punching. To avoid such a situation, the highest temperature reached is preferably made 800°C or more. Further, in order to avoid a situation in which the crystal grain sizes become too large and defects occur during the punching that is performed before stress relief annealing, preferably a time period for which the temperature of the cold-rolled steel sheet is 800°C or more is set to 15 seconds or less.

Although the thickness of the non-oriented electrical steel sheet produced by undergoing the processes described above is not particularly limited, the thickness is preferably 0.1 to 1.0 mm, and more preferably is 0.2 to 0.7 mm.

Hereunder, the present invention is described more specifically by way of Examples, although the present invention is not limited to these Examples.

EXAMPLES

Non-oriented electrical steel sheets were produced by performing a steelmaking process, a hot rolling process, a pickling process, a cold rolling process and a finish annealing process in this order. The chemical compositions of the non-oriented electrical steel sheets are shown in Table 1, and the production conditions employed are shown in Table 2. Note that, each kind of steel sheet was produced five times under the same conditions.

[Table 1]

Table 1

| Steel | Chemical Composition (mass%, balance: Fe and impurities) | | | | | | | | | | | | TH-Nb +V+Zr | B/N |
|---|---|---|---|---|---|---|---|---|---|---|---|---|---|---|
| | C | Si | Mn | solAl | Ti | Nb | V | Zr | N | S | B | Sn | | |
| A1 | 0.0032 | 0.30 | 0.12 | 0.023 | 0.0020 | 0.0021 | 0.0002 | 0.0011 | 0.0021 | 0.0032 | 0.0021 | - | 0.0054 | 1.0 |
| A2 | 0.0024 | 0.40 | 0.23 | 0.021 | 0.0011 | 0.0011 | 0.0003 | 0.0010 | 0.0023 | 0.0032 | 0.0031 | - | 0.0035 | 1.3 |
| A3 | 0.0045 | 0.60 | 0.44 | 0.036 | 0.0005 | 0.0023 | 0.0004 | 0.0012 | 0.0025 | 0.0024 | 0.0027 | 0.03 | 0.0044 | 1.1 |
| A4 | 0.0042 | 0.20 | 0.32 | 0.024 | 0.0002 | 0.0012 | 0.0006 | 0.0014 | 0.0013 | 0.0029 | 0.0011 | - | 0.0034 | 0.8 |
| A5 | 0.0021 | 0.80 | 0.35 | 0.022 | 0.0003 | 0.0028 | 0.0004 | 0.0012 | 0.0015 | 0.0035 | 0.0013 | 0.03 | 0.0047 | 0.9 |
| A6 | 0.0027 | 1.10 | 0.99 | 0.031 | 0.0004 | 0.0014 | 0.0004 | 0.0011 | 0.0022 | 0.0031 | 0.0013 | 0.08 | 0.0033 | 0.6 |
| A7 | 0.0013 | 1.30 | 1.42 | 0.025 | 0.0006 | 0.0016 | 0.0005 | 0.0011 | 0.0024 | 0.0026 | 0.0022 | 0.14 | 0.0038 | 0.9 |
| A8 | 0.0038 | 0.50 | 0.23 | 0.037 | 0.0008 | 0.0015 | 0.0011 | 0.0010 | 0.0014 | 0.0021 | 0.0013 | 0.43 | 0.0044 | 0.9 |
| a1 | 0.0067 | 0.10 | 0.34 | 0.031 | 0.0009 | 0.0021 | 0.0021 | 0.0015 | 0.0013 | 0.0019 | 0.0011 | 0.22 | 0.0066 | 0.8 |
| a2 | 0.0006 | 0.30 | 0.54 | 0.029 | 0.0026 | 0.0020 | 0.0012 | 0.0015 | 0.0014 | 0.0015 | 0.0020 | 0.01 | 0.0073 | 1.4 |
| a3 | 0.0044 | 1.80 | 0.32 | 0.035 | 0.0022 | 0.0013 | 0.0009 | 0.0012 | 0.0018 | 0.0029 | 0.0013 | 0.04 | 0.0056 | 0.7 |
| a4 | 0.0033 | 0.50 | 1.70 | 0.030 | 0.0013 | 0.0021 | 0.0011 | 0.0020 | 0.0020 | 0.0032 | 0.0011 | 0.06 | 0.0065 | 0.6 |
| a5 | 0.0024 | 0.90 | 0.36 | 0.032 | 0.0036 | 0.0037 | 0.0035 | 0.0039 | 0.0028 | 0.0037 | 0.0023 | 0.43 | 0.0147 | 0.8 |
| a6 | 0.0034 | 1.40 | 0.53 | 0.021 | 0.0002 | 0.0005 | 0.0004 | 0.0002 | 0.0021 | 0.0031 | 0.0022 | 0.34 | 0.0013 | 1.0 |
| a7 | 0.0042 | 1.30 | 0.31 | 0.037 | 0.0012 | 0.0019 | 0.0010 | 0.0012 | 0.0035 | 0.0023 | 0.0021 | 0.31 | 0.0053 | 0.6 |
| a8 | 0.0012 | 1.10 | 0.67 | 0.028 | 0.0014 | 0.0021 | 0.0013 | 0.0015 | 0.0022 | 0.0044 | 0.0023 | 0.24 | 0.0063 | 1.0 |
| a9 | 0.0035 | 0.40 | 0.93 | 0.032 | 0.0024 | 0.0023 | 0.0012 | 0.0013 | 0.0021 | 0.0021 | 0.0039 | 0.30 | 0.0072 | 1.9 |
| a10 | 0.0020 | 0.30 | 0.34 | 0.037 | 0.0021 | 0.0022 | 0.0011 | 0.0014 | 0.0017 | 0.0032 | 0.0005 | 0.20 | 0.0068 | 0.3 |

Table 2

| Test No. | Steel | Hot rolling process | | | | | | Cold rolling process | Finish annealing process | | |
|---|---|---|---|---|---|---|---|---|---|---|---|
| | | Slab heating temperature (°C) | Slab holding time (min) | Accumulative rolling ratio of 900-1000°C (%) | Holding temperature after hot rolling (°C) | Holding tine after hot rolling (min) | Total rolling reduction of hot rolling (%) | Cold rolling reduction (%) | Heating rate (°C/s) | Highest temperature reached (°C) | Time held at 800°C or more (s) |
| 1 | A1 | 1034 | 90 | 80 | 720 | 50 | 99 | 81 | 20 | 810 | 6 |
| 2 | A2 | 1045 | 110 | 80 | 770 | 30 | 99 | 81 | 30 | 820 | 9 |
| 3 | A3 | 1041 | 140 | 85 | 740 | 40 | 99 | 80 | 40 | 820 | 10 |
| 4 | A4 | 1033 | 130 | 90 | 760 | 50 | 99 | 86 | 50 | 830 | 11 |
| 5 | A5 | 1024 | 150 | 80 | 775 | 60 | 99 | 80 | 40 | 840 | 14 |
| 6 | A6 | 1022 | 170 | 85 | 750 | 80 | 99 | 86 | 30 | 810 | 11 |
| 7 | A7 | 1040 | 120 | 80 | 770 | 90 | 99 | 81 | 40 | 810 | 7 |
| 8 | A8 | 1023 | 130 | 85 | 720 | 120 | 99 | 80 | 50 | 830 | 10 |
| 9 | a1 | 1040 | 60 | 80 | 750 | 50 | 99 | 86 | 80 | 820 | 14 |
| 10 | a2 | 1033 | 50 | 85 | 710 | 40 | 99 | 80 | 100 | 810 | 12 |
| 11 | a3 | 1023 | 70 | 80 | 700 | 50 | 99 | 81 | 20 | 830 | 13 |
| 12 | a4 | 1045 | 100 | 85 | 740 | 80 | 99 | 86 | 30 | 845 | 12 |
| 13 | a5 | 1040 | 60 | 80 | 740 | 80 | 99 | 81 | 30 | 810 | 5 |
| 14 | a6 | 1022 | 90 | 80 | 760 | 90 | 99 | 86 | 40 | 830 | 12 |
| 15 | a7 | 1024 | 60 | 80 | 770 | 100 | 99 | 81 | 30 | 820 | 10 |
| 16 | a8 | 1021 | 90 | 85 | 775 | 35 | 99 | 80 | 50 | 820 | 11 |
| 17 | a9 | 1038 | 80 | 85 | 730 | 80 | 99 | 80 | 40 | 830 | 10 |
| 18 | al0 | 1033 | 60 | 80 | 720 | 40 | 99 | 86 | 70 | 810 | 12 |
| 19 | A4 | <u>1080</u> | 50 | 80 | 710 | 40 | 99 | 86 | 30 | 820 | 11 |
| 20 | A5 | <u>980</u> | 60 | 85 | 700 | 60 | 99 | 88 | 40 | 810 | 8 |

13

(continued)

| Test No. | Steel | Hot rolling process | | | | | | Cold rolling process | Finish annealing process | | |
|---|---|---|---|---|---|---|---|---|---|---|---|
| | | Slab heating temperature (°C) | Slab holding time (min) | Accumulative rolling ratio of 900-1000°C (%) | Holding temperature after hot rolling (°C) | Holding time after hot rolling (min) | Total rolling reduction of hot rolling (%) | Cold rolling reduction (%) | Heating rate (°C/s) | Highest temperature reached (°C) | Time held at 800°C or more (s) |
| 21 | A6 | 1020 | 20 | 80 | 740 | 80 | 99 | 81 | 50 | 820 | 10 |
| 22 | A7 | 1030 | 60 | 80 | 800 | 90 | 99 | 80 | 30 | 830 | 5 |
| 23 | A8 | 1024 | 80 | 85 | 650 | 50 | 99 | 80 | 40 | 840 | 10 |
| 24 | A4 | 1044 | 130 | 80 | 750 | 20 | 99 | 81 | 40 | 820 | 6 |
| 25 | A2 | 1031 | 120 | 60 | 740 | 90 | 99 | 86 | 30 | 810 | 10 |
| 26 | A3 | 1029 | 110 | 80 | 850 | 100 | 99 | 80 | 20 | 820 | 15 |
| 27 | A2 | 1021 | 100 | 85 | 600 | 120 | 99 | 88 | 30 | 830 | 12 |
| 28 | A3 | 1024 | 90 | 80 | 750 | 10 | 99 | 81 | 25 | 820 | 11 |
| 29 | A1 | 1031 | 40 | 85 | 730 | 40 | 99 | 86 | 10 | 840 | 10 |
| 30 | A1 | 1044 | 80 | 80 | 720 | 90 | 99 | 80 | 40 | 850 | 5 |

The contents of sol. B and of $N_{AlN}$ in the obtained non-oriented electrical steel sheets were measured by the following methods.

First, a specimen was cut out from the non-oriented electrical steel sheet, and the specimen was subjected to electrolysis in 10% acetylacetone-1% tetramethylammonium chloride-methanol at a current density of 20 mA/cm$^2$ to cause a reduction in weight of approximately 0.4 g. The solution used for the electrolysis was filtered using a filter with a pore size of 0.2 $\mu$m, and the content of B in the extraction residue collected on the filter was measured using ICP atomic emission spectroscopy. A value obtained by subtracting the content of B in the extraction residue from the content of B in the steel was adopted as the content of sol. B.

Similarly, a specimen was cut out from the non-oriented electrical steel sheet, and the specimen was subjected to electrolysis in 10% acetylacetone-1% tetramethylammonium chloride-methanol at a current density of 20 mA/cm$^2$ to cause a reduction in weight of approximately 0.4 g. The solution used for the electrolysis was filtered using a filter with a pore size of 0.2 $\mu$m, and the content of Al in the extraction residue collected on the filter was measured using ICP atomic emission spectroscopy. Further, the content of N in the extraction residue was determined by multiplying the content of Al in the extraction residue by 14/27, and the obtained value was adopted as the content of $N_{AlN}$.

With regard to the contents of sol. B and of $N_{AlN}$, the measured values obtained from the five steel sheets were averaged, and the resulting values were adopted as the respective measurement results.

Next, each obtained non-oriented electrical steel sheet was subjected to stress relief annealing in which the non-oriented electrical steel sheet was held at 750°C for two hours. The characteristics of the non-oriented electrical steel sheet after the stress relief annealing were then evaluated as described hereunder.

(A) Iron loss after stress relief annealing

The iron loss (W15/50) of the steel sheet after the aforementioned stress relief annealing was measured in accordance with a method specified in JIS C 2552: 2014 "Non-oriented magnetic steel sheet and strip". If W1 5/50 of the steel sheet after stress relief annealing was 5.0 W/kg or less, the non-oriented electrical steel sheet was determined as being excellent in iron loss characteristics after stress relief annealing.

(B) Magnetic flux density after stress relief annealing

The magnetic flux density ($B_{50}$) of the steel sheet after the aforementioned stress relief annealing was measured in accordance with a method specified in JIS C 2552: 2014 "Non-oriented magnetic steel sheet and strip". If $B_{50}$ of the steel sheet after stress relief annealing was 1.70 T or more, the non-oriented electrical steel sheet was determined as being excellent in magnetic flux density after stress relief annealing.

(C) Grain growth properties after stress relief annealing

The average crystal grain size of the steel sheet after the aforementioned stress relief annealing was measured using the same method as the method for measuring the average crystal grain size of a non-oriented electrical steel sheet that is described above. Non-oriented electrical steel sheets for which the average crystal grain size after the stress relief annealing was 50 $\mu$m or more were determined as having good grain growth properties in stress relief annealing.

(D) Punchability

Evaluation of punchability was performed using the non-oriented electrical steel sheet in a state after finish annealing but before performing stress relief annealing. Specifically, the steel sheet was punched with a clearance of 7% or more to 12% or less of the sheet thickness. The burr height at the punched portion was measured. For specimens for which the burr height was 30 $\mu$m or less, it was determined that the punchability was "good" (symbol A). For specimens for which the burr height was more than 30 $\mu$m to 100 $\mu$m or less, it was determined that the punchability was "acceptable" (symbol B).

The results of the above evaluations are shown in Table 3. Note that, the evaluation of the characteristics was performed using five steel sheets. Further, in Table 3, the average value and the maximum value are shown with respect to the iron loss, and the average value and the minimum value are shown with respect to the magnetic flux density.

[Table 3]

Table 3

| Test No. | Steel | Sheet thickness (mm) | B/N | soLB (mass%) | $N_{AlN}$ (mass%) | Average crystal grain size | | Magnetic properties | | | | Punchability | |
|---|---|---|---|---|---|---|---|---|---|---|---|---|---|
| | | | | | | After finish annealing ($\mu$m) | After stress relief anneal-ing ($\mu$m) | Iron loss WI5/50 (W/kg) | | Magnetic flux density $B_{50}$ (1) | | | |
| | | | | | | | | Average value | Maximum value | Average value | Minimum value | | |
| 1 | A1 | 0.50 | 1.0 | 0.0005 | 0.0003 | 20 | 55 | 4.3 | 4.5 | 1.77 | 1.76 | A | Inventive example |
| 2 | A2 | 0.50 | 1.3 | 0.0004 | 0.0002 | 15 | 64 | 3.4 | 3.6 | 1.76 | 1.75 | A | Inventive example |
| 3 | A3 | 0.50 | 1.1 | 0.0003 | 0.0005 | 22 | 57 | 3.4 | 3.5 | 1.77 | 1.76 | A | Inventive example |
| 4 | A4 | 0.50 | 0.8 | 0.0002 | 0.0003 | 21 | 58 | 3.3 | 3.5 | 1.75 | 1.74 | A | Inventive example |
| 5 | A5 | 0.50 | 0.9 | 0.0003 | 0.0004 | 21 | 64 | 3.6 | 3.9 | 1.78 | 1.77 | A | Inventive example |
| 6 | A6 | 0.50 | 0.6 | 0.0004 | 0.0005 | 14 | 74 | 4.5 | 4.8 | 1.74 | 1.73 | A | Inventive example |
| 7 | A7 | 0.50 | 0.9 | 0.0005 | 0.0003 | 17 | 53 | 3.2 | 3.5 | 1.74 | 1.73 | A | Inventive example |
| 8 | A8 | 0.50 | 0.9 | 0.0003 | 0.0002 | 25 | 64 | 3.5 | 3.9 | 1.74 | 1.73 | A | Inventive example |
| 9 | a1 | 0.50 | 0.8 | 0.0002 | 0.0004 | 21 | 52 | 6.7 | 7.9 | 1.77 | 1.76 | A | Comparative example |
| 10 | a2 | 0.50 | 1.4 | 0.0012 | 0.0004 | 13 | 78 | 4.2 | 4.5 | 1.65 | 1.64 | A | Comparative example |
| 11 | a3 | 0.50 | 0.7 | 0.0003 | 0.0002 | 13 | 53 | 4.1 | 4.5 | 1.67 | 1.66 | A | Comparative example |
| 12 | a4 | 0.50 | 0.6 | 0.0004 | 0.0003 | 21 | 26 | 5.6 | 5.9 | 1.65 | 1.64 | A | Comparative example |

EP 4 253 575 A1

| Test No. | Steel | Sheet thickness (mm) | B/N | soLB (mass%) | $N_{AlN}$ (mass%) | Average crystal grain size | | Magnetic properties | | | | Punchability | |
|---|---|---|---|---|---|---|---|---|---|---|---|---|---|
| | | | | | | After finish annealing ($\mu$m) | After stress relief annealing ($\mu$m) | Iron loss WI5/50 (W/kg) | | Magnetic flux density $B_{50}$ (1) | | | |
| | | | | | | | | Average value | Maximum value | Average value | Minimum value | | |
| 13 | a5 | 0.50 | 0.8 | 0.0004 | 0.0005 | 15 | 21 | 7.8 | 9.8 | 1.73 | 1.72 | A | Comparative example |
| 14 | a6 | 0.50 | 1.0 | 0.0003 | 0.0009 | 21 | 24 | 8.7 | 9.9 | 1.74 | 1.73 | A | Comparative example |
| 15 | a7 | 0.35 | 0.6 | 0.0002 | 0.0013 | 16 | 20 | 6.9 | 7.8 | 1.72 | 1.71 | A | Comparative example |
| 16 | a8 | 0.50 | 1.0 | 0.0004 | 0.0004 | 14 | 17 | 8.2 | 9.7 | 1.74 | 1.73 | A | Comparative example |
| 17 | a9 | 0.50 | 1.9 | 0.0008 | 0.0003 | 13 | 56 | 4.7 | 4.9 | 1.67 | 1.65 | A | Comparative example |
| 18 | a10 | 0.50 | 0.3 | 0.0001 | 0.0007 | 12 | 32 | 6.7 | 7.2 | 1.72 | 1.71 | A | Comparative example |
| 19 | A4 | 0.50 | 0.8 | 0.0002 | 0.0008 | 11 | 21 | 8.8 | 9.9 | 1.75 | 1.74 | A | Comparative example |
| 20 | A5 | 0.50 | 0.9 | 0.0003 | 0.0008 | 21 | 35 | 7.5 | 9.5 | 1.76 | 1.75 | A | Comparative example |
| 21 | A6 | 0.35 | 0.6 | 0.0003 | 0.0011 | 23 | 32 | 7.4 | 7.6 | 1.74 | 1.73 | A | Comparative example |
| 22 | A7 | 0.50 | 0.9 | 0.0003 | 0.0009 | 21 | 31 | 8.4 | 9.1 | 1.75 | 1.74 | A | Comparative example |
| 23 | A8 | 0.50 | 0.9 | 0.0003 | 0.0007 | 13 | 22 | 7.4 | 8.3 | 1.74 | 1.73 | A | Comparative example |
| 24 | A4 | 0.50 | 0.8 | 0.0002 | 0.0006 | 14 | 21 | 6.8 | 7.9 | 1.77 | 1.76 | A | Comparative example |
| 25 | A2 | 0.50 | 1.3 | 0.0016 | 0.0002 | is | 55 | 4.1 | 4.3 | 1.66 | 1.65 | A | Comparative example |

(continued)

| Test No. | Steel | Sheet thickness (mm) | B/N | soLB (mass%) | $N_{AIN}$ (mass%) | Average crystal grain size | | Magnetic properties | | | | Punchability | |
|---|---|---|---|---|---|---|---|---|---|---|---|---|---|
| | | | | | | After finish annealing ($\mu$m) | After stress relief annealing ($\mu$m) | Iron loss WI5/50 (W/kg) | | Magnetic flux density $B_{50}$ (1) | | | |
| | | | | | | | | Average value | Maximum value | Average value | Minimum value | | |
| 26 | A3 | 0.50 | 1.1 | 0.0011 | 0.0003 | 16 | 56 | 3.5 | 3.8 | 1.67 | 1.65 | A | Comparative example |
| 27 | A2 | 0.35 | 1.3 | 0.0008 | 0.0004 | 21 | 53 | 3.3 | 3.5 | 1.68 | 1.65 | A | Comparative example |
| 28 | A3 | 0.50 | 1.1 | 0.0007 | 0.0003 | 24 | 62 | 3.7 | 3.9 | 1.65 | 1.65 | A | Comparative example |
| 29 | A1 | 0.50 | 1.0 | 0.0003 | 0.0004 | 25 | 64 | 4.2 | 4.4 | 1.71 | 1.70 | A | Inventive example |
| 30 | A1 | 0.50 | 1.0 | 0.0004 | 0.0005 | 50 | 57 | 4.5 | 4.8 | 1.76 | 1.75 | B | Inventive example |

As shown in Table 3, in Test Nos. 1 to 8, 29 and 30 that satisfied the requirements of the present invention, it was found that excellent magnetic properties were stably exhibited. On the other hand, in Test Nos. 9 to 18 whose chemical compositions did not satisfy the requirements of the present invention, the results showed that at least one of iron loss and magnetic properties deteriorated.

Further, in Test Nos. 19 to 24, because steel in which the content of B was insufficient with respect to the content of N was used, and the production conditions were not appropriate, the content of $N_{AIN}$ was more than the upper limit and, as a result, there was a deterioration in iron loss. In addition, in Test Nos. 25 to 28, because steel in which the content of B was excessive with respect to the content of N was used, and the production conditions were not appropriate, the content of dissolved B was more than the upper limit and, as a result, there was a deterioration in magnetic flux density.

INDUSTRIAL APPLICABILITY

According to the present invention, a non-oriented electrical steel sheet in which grain growth after stress relief annealing is good and in which the iron loss and the magnetic flux density after stress relief annealing are favorable can be stably provided at a low cost. Accordingly, the present invention has very high industrial applicability.

**Claims**

1.  A non-oriented electrical steel sheet having a chemical composition comprising, in mass%,

    C: 0.0010 to 0.0050%,
    Si: 1.50% or less,
    Mn: 0.10 to 1.50%,
    sol. A1: 0.010 to 0.040%,
    Ti: 0.0030% or less,
    Nb: 0.0030% or less,
    V: 0.0030% or less,
    Zr: 0.0030% or less,
    N: 0.0030% or less,
    S: 0.0040% or less,
    B: 0.0045% or less, and
    the balance: Fe and impurities,
    and satisfying Formulas (i) to (iv) below:

$$0.0020 \leq Ti+Nb+V+Zr \leq 0.0120 \; ...(i)$$

$$0.5 \leq B/N \leq 1.5 \; ...(ii)$$

$$sol. \; B \leq 0.0005 \; ...(iii)$$

$$N_{AIN} \leq 0.0005 \; ...(iv)$$

    where each symbol of an element in Formulas (i) and (ii) above represents a content (mass%) of a corresponding element, sol. B in Formula (iii) above represents a dissolved B amount (mass%), and $N_{AIN}$ in Formula (iv) above represents an N amount (mass%) that is present as AlN.

2.  The non-oriented electrical steel sheet according to claim 1, wherein the chemical composition contains, in lieu of a part of the Fe, in mass%,
    Sn: 0.50% or less.

3.  The non-oriented electrical steel sheet according to claim 1 or claim 2, wherein:

    an average crystal grain size is 30 $\mu$m or less, and

an average crystal grain size after performing stress relief annealing under conditions of holding the non-oriented electrical steel sheet at 750°C for two hours is 50 $\mu$m or more.

4. A method for producing the non-oriented electrical steel sheet according to any one of claim 1 to claim 3, comprising:

a steelmaking process of producing a slab having a chemical composition according to claim 1 or claim 2,
a hot rolling process of, after heating the slab that is obtained, performing hot rolling to obtain a hot-rolled steel sheet,
a pickling process of performing pickling on the hot-rolled steel sheet,
a cold rolling process of performing cold rolling on the hot-rolled steel sheet after pickling to obtain a cold-rolled steel sheet, and
a finish annealing process of subjecting the cold-rolled steel sheet to finish annealing,
wherein:

in the hot rolling process,
before performing hot rolling, a temperature of the slab is held within a range of 1000 to 1050°C for 30 minutes or more,
an accumulative rolling ratio within a temperature range of 900 to 1000°C is made 70% or more, and
after hot rolling is performed, a temperature of the hot-rolled steel sheet is held within a range of 700°C or more to less than 780°C for 30 minutes or more.

5. The method for producing the non-oriented electrical steel sheet according to claim 4, wherein:
in the finish annealing process, the cold-rolled steel sheet is heated to a highest temperature reached of 800°C or more to less than 850°C at an average heating rate of 20°C/s or more, and a time period for which a temperature of the cold-rolled steel sheet is 800°C or more is 15 seconds or less.

6. A hot-rolled steel sheet which serves as a starting material for the non-oriented electrical steel sheet according to any one of claim 1 to claim 3, having a chemical composition comprising, in mass%,

C: 0.0010 to 0.0050%,
Si: 1.50% or less,
Mn: 0.10 to 1.50%,
sol. Al: 0.010 to 0.040%,
Ti: 0.0030% or less,
Nb: 0.0030% or less,
V: 0.0030% or less,
Zr: 0.0030% or less,
N: 0.0030% or less,
S: 0.0040% or less,
B: 0.0045% or less, and
the balance: Fe and impurities,
and satisfying Formulas (i) to (iv) below:

$$0.0020 \leq Ti+Nb+V+Zr \leq 0.0120 \ ...(i)$$

$$0.5 \leq B/N \leq 1.5 \ ...(ii)$$

$$sol.\ B \leq 0.0005 \ ...(iii)$$

$$N_{AlN} \leq 0.0005 \ ...(iv)$$

where each symbol of an element in Formulas (i) and (ii) above represents a content (mass%) of a corresponding element, sol. B in Formula (iii) above represents a dissolved B amount (mass%), and $N_{AlN}$ in Formula (iv) above represents an N amount (mass%) that is present as AlN.

7. The hot-rolled steel sheet according to claim 6, wherein the chemical composition contains, in lieu of a part of the Fe, in mass%,
   Sn: 0.50% or less.

FIGURE 1

## INTERNATIONAL SEARCH REPORT

| International application No. |
|---|
| PCT/JP2020/044203 |

A. CLASSIFICATION OF SUBJECT MATTER
C21D 8/12(2006.01)i; C22C 38/00(2006.01)i; C22C 38/14(2006.01)i; H01F
1/147(2006.01)i
FI: C22C38/00 303U; C22C38/14; H01F1/147 175; C21D8/12 A

According to International Patent Classification (IPC) or to both national classification and IPC

B. FIELDS SEARCHED

Minimum documentation searched (classification system followed by classification symbols)
C21D8/12; C22C38/00-38/60; H01F1/147

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-104080 A (NIPPON STEEL & SUMITOMO METAL CORPORATION) 30 May 2013 (2013-05-30) | 1-7 |
| A | WO 2005/100627 A1 (NIPPON STEEL CORP.) 27 October 2005 (2005-10-27) | 1-7 |
| A | JP 59-157259 A (NIPPON STEEL CORP.) 06 September 1984 (1984-09-06) | 1-7 |
| A | JP 2013-44010 A (NIPPON STEEL & SUMITOMO METAL CORPORATION) 04 March 2013 (2013-03-04) | 1-7 |
| A | JP 58-37122 A (NIPPON STEEL CORP.) 04 March 1983 (1983-03-04) | 1-7 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 February 2021 (01.02.2021) | 09 February 2021 (09.02.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/044203

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-104144 A (KAWASAKI STEEL CORP.) 11 April 2000 (2000-04-11) | 1-7 |
| A | JP 3-219020 A (NKK CORP.) 26 September 1991 (1991-09-26) | 1-7 |
| A | JP 58-164724 A (KAWASAKI STEEL CORP.) 29 September 1983 (1983-09-29) | 1-7 |
| A | CN 109825760 A (RIZHAO STEEL HOLDING GROUP CO., LTD.) 31 May 2019 (2019-05-31) | 1-7 |
| A | CN 101392351 A (ANGANG STEEL CO., LTD.) 25 March 2009 (2009-03-25) | 1-7 |

Form PCT/ISA/210 (continuation of second sheet) (January 2015)

INTERNATIONAL SEARCH REPORT
Information on patent family members

International application No.

PCT/JP2020/044203

| Patent Documents referred in the Report | Publication Date | Patent Family | Publication Date |
|---|---|---|---|
| JP 2013-104080 A | 30 May 2013 | (Family: none) | |
| WO 2005/100627 A1 | 27 Oct. 2005 | KR 10-2006-0134154 A CN 1942597 A | |
| JP 59-157259 A | 06 Sep. 1984 | EP 84980 A2 | |
| JP 2013-44010 A | 04 Mar. 2013 | (Family: none) | |
| JP 58-37122 A | 04 Mar. 1983 | (Family: none) | |
| JP 2000-104144 A | 11 Apr. 2000 | US 6322639 B1 WO 1999/060182 A1 EP 1001042 A1 CN 1274393 A KR 10-0484989 B1 | |
| JP 3-219020 A | 26 Sep. 1991 | (Family: none) | |
| JP 58-164724 A | 29 Sep. 1983 | (Family: none) | |
| CN 109825760 A | 31 May 2019 | (Family: none) | |
| CN 101392351 A | 25 Mar. 2009 | (Family: none) | |

Form PCT/ISA/210 (patent family annex) (January 2015)

25

**EP 4 253 575 A1**

**REFERENCES CITED IN THE DESCRIPTION**

**Patent documents cited in the description**

- JP 54163720 A
- JP 63195217 A
- JP 3104844 A
- JP 2004002954 A
- WO 2005100627 A